# EUROPEAN PATENT APPLICATION

(11) **EP 4 704 293 A1**
(43) Date of publication of application: **04.03.2026**
(21) Application number: 24796666.6
(22) Date of filing: 25.03.2024
(51) Int. Cl.: H02J 7/00, H01M 10/44, H01M 10/48, H02J 7/02

(54) **ABNORMALITY DETECTION DEVICE AND BATTERY SYSTEM**

(30) Priority: 26.04.2023 JP 2023072170
(71) Applicant: Panasonic Intellectual Property Management Co., Ltd., Kadoma-shi, Osaka 571-0057 (JP)
(72) Inventor: OHASHI, Osamu, Kadoma-shi, Osaka 571-0057 (JP); HAMADA, Yuya, Kadoma-shi, Osaka 571-0057 (JP)
(74) Representative: Novagraaf International SA
(86) International application number: PCT/JP2024/011691
(87) International publication number: WO 2024/224908

(57) **Abstract**

A voltage measurement circuit is configured to measure voltages of cells connected in series to one another. Input resistors are connected to voltage measurement lines, respectively. Capacitors are connected between two lines of the voltage measurement lines. Discharge circuits are connected between the lines at respective nodes closer to a voltage measurement circuit than a low-pass filter. A control circuit is configured to turn off a switch of a certain channel at a predetermined time after turning on the switch of the certain channel. When a voltage of a channel immediately upper than the certain channel exceeds a threshold voltage when a predetermined period of time elapses from the turning off of the switch, the control circuit is configured to determine that an abnormality occurs in a voltage measurement line among the plurality of voltage measurement lines between the certain channel and the channel immediately upper than the certain channel.

## Description

### TECHNICAL FIELD

The present disclosure relates to an abnormality detection device and a battery system for detecting an abnormality of voltage measurement lines connected to a battery assembly.

### BACKGROUND ART

A voltage, temperature, and current of a battery assembly are constantly monitored from the viewpoint of ensuring safety. In particular, a lithium ion battery requires strict voltage management because a normal region is close to an unusable region, and the voltage is measured and monitored in each cell.

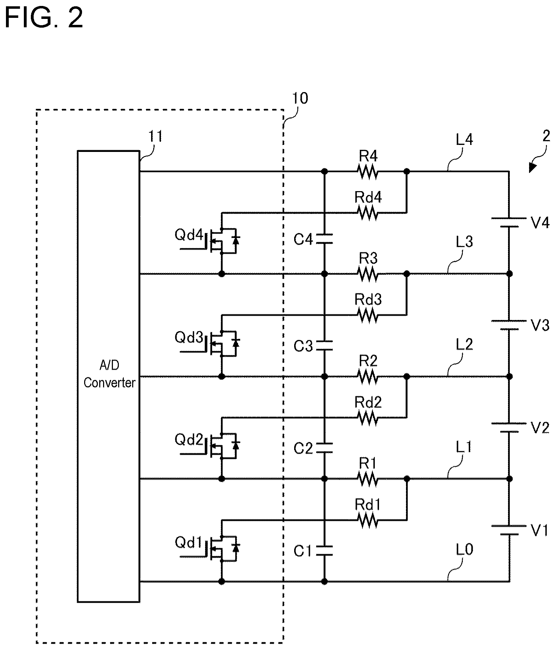

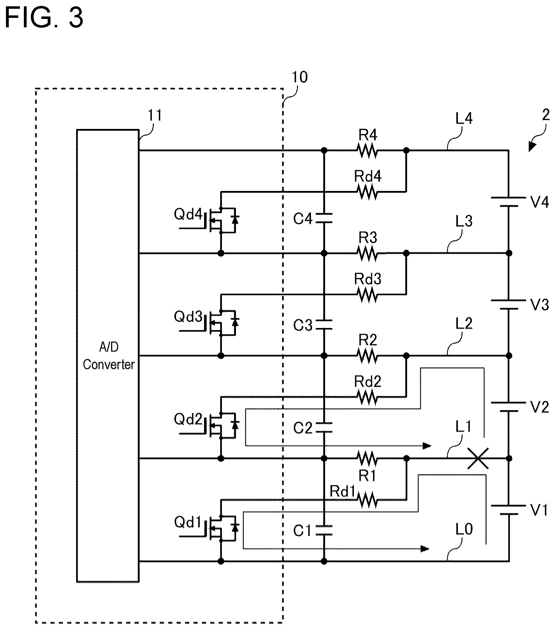

PTL 1 discloses a method in which, in order to detect disconnection of a voltage measurement line connected to each cell constituting a battery assembly, a balance adjustment circuit for equalization discharge of a target channel operates to diagnose whether or not there is a suspicion of disconnection, and a balance adjustment circuit of an adjacent channel operates to determine the disconnection (see FIGS. 2 and 3). As shown in FIG. 3, when first voltage measurement line L1 is disconnected, when first discharge switch Qd1 is turned on, a voltage of a channel of first cell V1 decreases. After that, when second discharge switch Qd2 is turned on, a voltage of a channel of second cell V2 increases substantially to a total of the voltages of first cell V1 and second cell V2.

### CITATION LIST

### Patent Literature

PTL 1: Japanese Patent Laid-Open Publication No. 2009-89488

### SUMMARY OF INVENTION

In the above method, at least two balance adjustment circuits need to sequentially operate, which takes a long time to determine the disconnection. Two systems of voltage measurement lines and input lines for balance adjustment are connected to an IC, which requires a large number of ports of the IC.

An abnormality detection device according to an aspect of the disclosure includes: a voltage measurement circuit connected to positive electrodes of a plurality of cells with a plurality of voltage measurement lines, respectively, the voltage measurement circuit being connected to a negative electrode of a lowest cell among the plurality of cells with a ground line, the plurality of cells being connected in series to one another, the voltage measurement circuit being configured to measure voltages of the plurality of cells; a plurality of input resistors connected to the plurality of voltage measurement lines, respectively; a plurality of capacitors connected between two adjacent voltage measurement lines among the plurality of voltage measurement lines and between the ground line and a voltage measurement line of the lowest cell among the plurality of voltage measurement lines, respectively, the plurality of capacitors constituting low-pass filters with the plurality of input resistors, respectively; a plurality of discharge circuits connected between the two adjacent voltage measurement lines and between the ground line and the voltage measurement line of the lowest cell at respective nodes which are closer to the voltage measurement circuit than the low-pass filters; and a control circuit configured to execute equalization processing on the plurality of cells by controlling the plurality of discharge circuits based on the voltages of the plurality of cells measured by the voltage measurement circuit. Each of the plurality of discharge circuits includes a discharge resistor and a switch connected in series to the discharge resistor. The control circuit is configured to: turn on a switch of a certain channel and turn off the switch of the certain channel at a predetermined time after turning on the switch of the certain channel; and, when a voltage of a channel immediately upper than the certain channel exceeds a threshold voltage when a predetermined period of time elapses from the turning off of the switch, determine that an abnormality occurs in a voltage measurement line among the plurality of voltage measurement lines (L1-L4) between the certain channel and the channel immediately upper than the certain channel.

According to the disclosure, an abnormality of a voltage measurement line is detected in a short time with a low cost.

### BRIEF DESCRIPTION OF DRAWINGS

FIG. 1 is a diagram showing an overall configuration of a battery system according to an exemplary embodiment.
FIG. 2 is a diagram showing a specific configuration example of a battery assembly and an analog front-end IC according to a comparative example.
FIG. 3 is a diagram showing a disconnection detection method of a voltage measurement line in a circuit configuration shown in FIG. 2.
FIG. 4 is a diagram showing a specific configuration example of a battery assembly, an analog front-end IC, and a double protection IC according to the embodiment.
FIG. 5 is a diagram showing a disconnection detection method of a voltage measurement line in a circuit configuration shown in FIG. 4.
FIG. 6 is a schematic timing chart showing Specific Example 1 of the disconnection detection method in a normal state.
FIG. 7 is a schematic timing chart showing Specific Example 1 of the disconnection detection method in a cell balancing state.
FIG. 8 is a schematic timing chart showing Specific Example 2 of the disconnection detection method in the normal state.
FIG. 9 is a schematic timing chart showing Specific Example 2 of the disconnection detection method in the cell balancing state.

### DESCRIPTION OF EMBODIMENTS

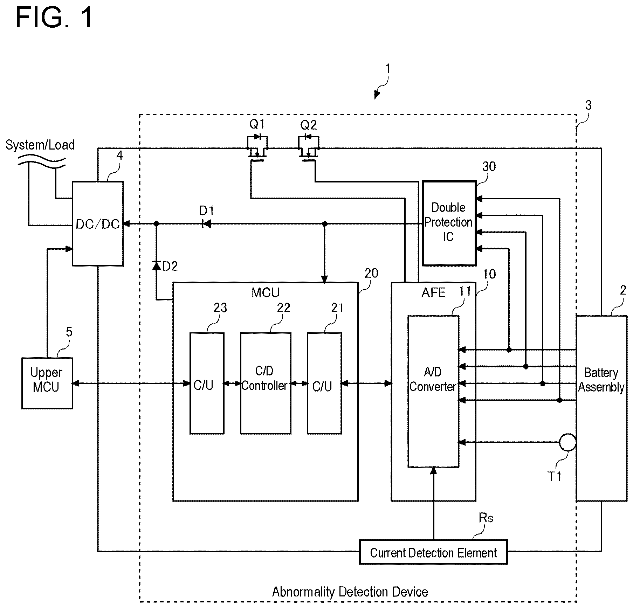

FIG. 1 is a diagram showing an overall configuration of battery system 1 according to an exemplary embodiment. Battery system 1 according to the embodiment may be used as, for example, a backup power supply system of a data center. Battery system 1 includes battery assembly 2 and abnormality detection device 3.

Battery assembly 2 includes cells connected in series to one another. The cell may be a lithium ion battery cell, a nickel hydrogen battery cell, or a lead battery cell. Hereinafter, in the present specification, a lithium ion battery cell with a nominal voltage ranging from 3.6 V to 3.7 V is assumed.

Battery assembly 2 is connected to DC/DC converter 4. DC/DC converter 4 is connected to a commercial power system and a load via an inverter. DC/DC converter 4 is configured to charge battery assembly 2 with power received from the commercial power system via the inverter. At this moment, DC/DC converter 4 performs constant current charging or constant voltage charging by controlling a current or a voltage. DC/DC converter 4 is configured to supply power from battery assembly 2 to the load via the inverter. In the case of a DC load, power is supplied without passing through an inverter.

A cut-off switch is inserted into a power line connecting battery assembly 2 to DC/DC converter 4. In the example shown in FIG. 1, the cut-off switch includes first cut-off switch Q1 and second cut-off switch Q2 which are implemented by N-channel metal-oxide-semiconductor field-effect transistors (MOSFETs) and are connected in series in opposite directions. The N-channel MOSFET includes a parasitic diode directed from a source to a drain thereof. The two N-channel MOSFETs connected in series in opposite directions constitutes a bidirectional switch blocking a current passing through the parasitic diode. In the example shown in FIG. 1, a discharge current from battery assembly 2 is cut off by turning off first cut-off switch Q1, and a charge current to battery assembly 2 is cut off by turning off second cut-off switch Q2.

Abnormality detection device 3 includes analog front-end (AFC) IC 10, microcontroller (MCU) 20, and double protection IC 30 as main components. Analog front-end IC 10 is configured to measure and monitor a voltage of each cell of battery assembly 2, a current flowing through battery assembly 2, and a temperature of battery assembly 2, and transmits measurement data to microcontroller 20.

Analog front-end IC 10 includes A/D converter 11. Current detection element Rs is connected to the power line connecting battery assembly 2 to DC/DC converter 4. For example, a shunt resistor may be used as current detection element Rs. A voltage across the shunt resistor is amplified by a differential amplifier and is output to A/D converter 11 as an analog voltage. A/D converter 11 converts, into a digital value, the analog voltage received from the differential amplifier indicating the current flowing through battery assembly 2, and transmits the digital value to microcontroller 20. A Hall element may be used instead of the shunt resistor and the differential amplifier.

At least one thermistor T1 is disposed on a surface of battery assembly 2. Thermistor T1 is a temperature sensor with a resistance value changing according to temperature. Specifically, for example, a voltage obtained by dividing a voltage of a power supply for powering microcontroller 20 or analog front-end IC 10 by thermistor T1 and a voltage dividing resistor is input to A/D converter 11. A/D converter 11 converts the input analog voltage indicating a surface temperature of battery assembly 2 into a digital value, and transmits the digital value to microcontroller 20. Thermistors T1 may be preferably disposed at plural positions on battery assembly 2. Instead of thermistor T1, another temperature sensor, such as a thermocouple or a platinum resistance thermometer, may be used.

A/D converter 11 is connected to each of positive electrodes of the cells constituting battery assembly 2 with voltage measurement lines. A/D converter 11 is connected to a negative electrode of the lowest cell constituting battery assembly 2 with a ground line. A/D converter 11 converts an analog voltage of each of the cells constituting battery assembly 2 into a digital value, and transmits the digital value to microcontroller 20.

Microcontroller 20 includes first communication unit (C/U) 21, charge and discharge (C/D) controller 22, and second communication unit (C/U) 23. Microcontroller 20 is configured to receive a voltage, current, and temperature of each of cells of battery assembly 2 from analog front-end IC 10 via first communication unit 21. Microcontroller 20 is configured to transmit the voltage, current, and temperature of each cell of battery assembly 2 as battery data to upper microcontroller 5 via second communication unit 23.

Charge and discharge controller 22 is configured to determine the presence or absence of an overcharge cell or an over-discharge cell based on the voltage of each cell of battery assembly 2 received from analog front-end IC 10, determine the presence or absence of an overcurrent based on the current of battery assembly 2, and determine the presence or absence of an overtemperature based on the temperature of battery assembly 2.

Charge and discharge controller 22 turns off first cut-off switch Q1 or second cut-off switch Q2 to protect battery assembly 2 when an overcharge, an over-discharge, an overcurrent, or an overtemperature occurs. FIG. 1 shows a configuration in which gate voltages of first cut-off switch Q1 and second cut-off switch Q2 are controlled via analog front-end IC 10. The gate voltages of first cut-off switch Q1 and second cut-off switch Q2 may be controlled by microcontroller 20 via another drive circuit.

When at least one of the overcharge, the over-discharge, the overcurrent, and the overtemperature occurs, charge and discharge controller 22 transmits an abnormality detection signal to upper microcontroller 5 via second communication unit 23. When the abnormality detection signal is received from microcontroller 20, upper microcontroller 5 stops an operation of DC/DC converter 4. When an overcharge occurs, charge and discharge controller 22 may directly stop hardware of DC/DC converter 4 via an alarm signal line into which diode D2 is inserted.

The overcharge among abnormalities of battery assembly 2 is likely to lead to early smoke generation and ignition and is highly urgent. From the viewpoint of fail-safe, abnormality detection device 3 according to the embodiment includes double protection IC 30. Double protection IC 30 monitors the voltage of each cell of battery assembly 2. When the voltage of a cell exceeding an overcharge threshold occurs, double protection IC 30 directly stops the hardware of DC/DC converter 4 via the alarm signal line into which diode D1 is inserted. An alarm signal output from double protection IC 30 is also input to microcontroller 20. When the alarm signal is received from double protection IC 30, microcontroller 20 turns off first cut-off switch Q1 or second cut-off switch Q2, and transmits an overcharge stop signal to upper microcontroller 5.

In order to suppress the excessively frequent occurrence of hardware stop due to double protection IC 30, a threshold voltage at which double protection IC 30 determines an overcharge is higher than a threshold voltage at which microcontroller 20 determines an overcharge.

FIG. 2 is a diagram showing a configuration example of battery assembly 2 and analog front-end IC 10 according to a comparative example. FIG. 2 shows an example in which battery assembly 2 includes first to fourth cells V1 to V4 connected in series to one another. A/D converter 11 is connected to positive electrodes of first to fourth cells V1 to V4 with first to fourth voltage measurement lines L1 to L4, respectively, and is connected to a negative electrode of first cell V1 with ground line L0. A/D converter 11 is configured to measure voltages of the four channels.

First to fourth input resistors R1 to R4 are connected to first to fourth voltage measurement lines L1 to L4, respectively. First to fourth input capacitors C1 to C4 are connected between two adjacent voltage measurement lines and between first voltage measurement line L1 and ground line L0, respectively. First to fourth input resistors R1 to R4 and first to fourth input capacitors C1 to C4 constitute low-pass filters, respectively, to suppress aliasing.

Four discharge circuits (hereinafter referred to as balance adjustment circuits) for equalization processing (hereinafter referred to as cell balancing) are connected between two adjacent voltage measurement lines and between first voltage measurement line L1 and ground line L0. The balance adjustment circuits include first to fourth discharge resistors Rd1 to Rd4 and first to fourth discharge switches Qd1 to Qd4 which are connected in series to each other, respectively.

Semiconductor switches, such as MOSFETs, may be used as first to fourth discharge switches Qd1 to Qd4. First to fourth discharge switches Qd1 to Qd4 are provided in analog front-end IC 10, and are turned on and off under control by charge and discharge controller 22 of microcontroller 20. First to fourth discharge resistors Rd1 to Rd4 are provided outside analog front-end IC 10, and are connected to first to fourth voltage measurement lines L1 to L4 at respective nodes closer to battery assembly 2 than the low-pass filters, respectively.

A/D converter 11 is configured to measure voltages of cells V1 to V4 and diagnose disconnection of voltage measurement lines L1 to L4 by monitoring the voltages of the channels.

Charge and discharge controller 22 of microcontroller 20 is configured to execute cell balancing of first to fourth cells V1 to V4 by controlling the balance adjustment circuits connected in parallel to the cells based on the voltages of first to fourth cells V1 to V4 of battery assembly 2 measured by analog front-end IC 10. In a general passive cell balance method, the other cells are discharged to a voltage (hereinafter, referred to as a target value) of the cell having the lowest voltage among cells V1 to V4. The target value may be defined by a capacity, a state of charge (SOC), a dischargeable amount, or a chargeable amount.

Charge and discharge controller 22 sets a measurement value of the cell having the lowest voltage among cells V1 to V4 as the target value, and calculates a difference between the target value and each of the measurement values of the other cells. Charge and discharge controller 22 calculates a discharge amount of each of the other cells based on the calculated differences. Charge and discharge controller 22 calculates a discharge time of each of the other cells based on the calculated discharge amounts. Charge and discharge controller 22 generates a control signal for cell balancing including the discharge times of the cells, and transmits the control signal to analog front-end IC 10. Based on the control signal received from charge and discharge controller 22, analog front-end IC 10 controls each of discharge switches Qd1 to Qd4 to be turned on for the calculated time.

The circuit configuration shown in FIG. 2 is suitable for large-capacity battery assembly 2 for, e.g., in-vehicle use. In large-capacity battery assembly 2, even when a discharge current for cell balancing flows, the influence on the voltage of each cell is small. Therefore, each cell voltage can be sampled even during cell balancing. Since it takes time to perform cell balancing in large-capacity battery assembly 2, control that does not stop the equalization discharge at a voltage measurement timing is often used.

FIG. 3 is a diagram showing a disconnection detection method of a voltage measurement line in the circuit configuration of FIG. 2. In the example shown in FIG. 3, first voltage measurement line L1 is disconnected. When the disconnection of first voltage measurement line L1 is diagnosed, charge and discharge controller 22 turns on first discharge switch Qd1 of a first channel connected to first cell V1. When first voltage measurement line L1 is disconnected, the voltage of the first channel input to A/D converter 11 decreases. However, since the voltage of the first channel may decrease due to a factor other than the disconnection of first voltage measurement line L1, the disconnection of first voltage measurement line L1 cannot be determined at this stage.

When first discharge switch Qd1 is turned on and the voltage of the first channel decreases, charge and discharge controller 22 turns on second discharge switch Qd2. When first voltage measurement line L1 is disconnected, a voltage of a second channel connected to second cell V2 rises to substantially a total voltage of first cell V1 and second cell V2. When first voltage measurement line L1 is not disconnected, the voltage of second cell V2 is directly measured as the voltage of the second channel. When the voltage of the second channel rises to a voltage of two cells in series, charge and discharge controller 22 determines the disconnection of first voltage measurement line L1.

As described above, in the comparative example, it is necessary to turn on two switches, first discharge switch Qd1 and second discharge switch Qd2, with a time difference, therefore, it takes time to perform the disconnection diagnosis.

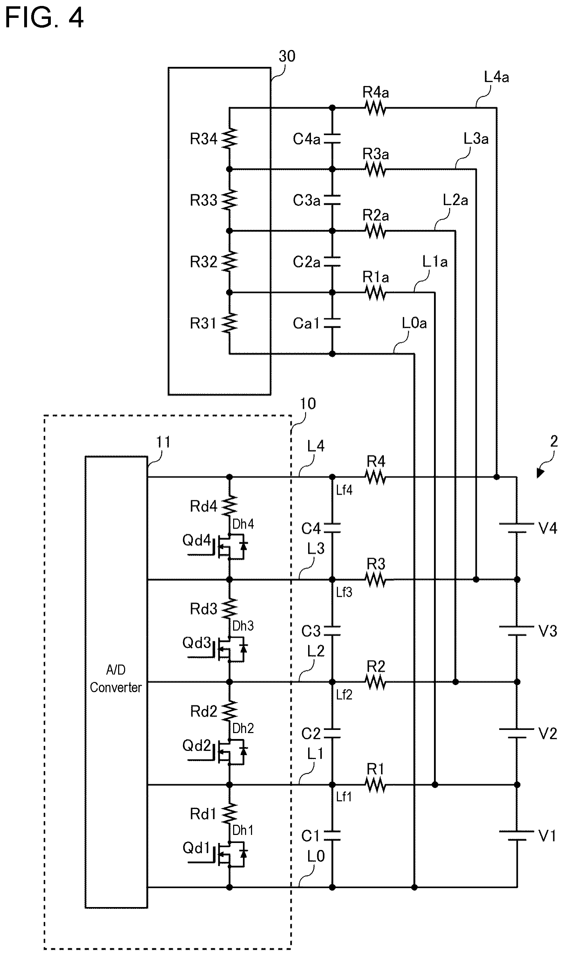

FIG. 4 is a diagram showing a configuration example of battery assembly 2, analog front-end IC 10, and double protection IC 30 according to the embodiment. In FIG. 4, components identical to those of the circuit shown in FIG. 2 are denoted by the same reference numerals, and their description may be omitted.

Voltage measurement line L1 is connected to a positive electrode of cell V1 via input resistor R1. Voltage measurement line L2 is connected to a positive electrode of cell V2 via input resistor R2. Voltage measurement line L3 is connected to a positive electrode of cell V3 via input resistor R3. Voltage measurement line L4 is connected to a positive electrode of cell V4 via input resistor R4.

First to fourth input resistors R1 to R4 are connected to first to fourth voltage measurement lines L1 to L4, respectively. First to fourth input capacitors C1 to C4 are connected between two adjacent voltage measurement lines, that is, two voltage measurement lines immediately above and below each other, and between first voltage measurement line L1 and ground line L0, respectively. First to fourth input resistors R1 to R4 and first to fourth input capacitors C1 to C4 constitute low-pass filters Lf1 to Lf4, respectively, to suppress aliasing.

Four discharge circuits Dh1 to Dh4 (hereinafter referred to as balance adjustment circuits) for equalization processing (hereinafter referred to as cell balancing) are connected between two adjacent voltage measurement lines, that is, two voltage measurement lines immediately above and below each other, and between first voltage measurement line L1 and ground line L0, respectively. Discharge circuits Dh1 to Dh4 include first to fourth discharge resistors Rd1 to Rd4 and first to fourth discharge switches Qd1 to Qd4 which are connected in series to each other, respectively.

Semiconductor switches, such as MOSFETs, may be used as first to fourth discharge switches Qd1 to Qd4. First to fourth discharge switches Qd1 to Qd4 are provided in analog front-end IC 10, and are turned on and off under control of charge and discharge controller 22 of microcontroller 20.

In accordance with the embodiment, first to fourth discharge switches Qd1 to Qd4 and first to fourth discharge resistors Rd1 to Rd4 are provided in analog front-end IC 10. First to fourth discharge resistors Rd1 to Rd4 are connected to first to fourth voltage measurement lines L1 to L4 at respective nodes closer to A/D converter 11 than the low-pass filters, respectively.

Voltage measurement line L1 is connected to the positive electrode of cell V1 via input resistor R1. Voltage measurement line L2 is connected to the positive electrode of cell V2 via input resistor R2. Voltage measurement line L3 is connected to the positive electrode of cell V3 via input resistor R3. Voltage measurement line L4 is connected to the positive electrode of cell V4 via input resistor R4.

Cell V1 and voltage measurement line L1 connected to the positive electrode of cell V1 via input resistor R1 constitute a first channel. The first channel further includes: first low-pass filter Lf1 including first input resistor R1 and first capacitor C1; and first discharge circuit Dh1 including first discharge switch Qd1 and first discharge resistor Rd1 which are connected in series to each other. Cell V2 and voltage measurement line L2 connected to the positive electrode of cell V2 via input resistor R2 constitute a second channel. The second channel further includes: second low-pass filter Lf2 including second input resistor R2 and second capacitor C2; and second discharge circuit Dh2 including second discharge switch Qd2 and second discharge resistor Rd2 which are connected in series to each other. Cell V3 and voltage measurement line L3 connected to the positive electrode of cell V3 via input resistor R3 constitute a third channel. The third channel further includes: third low-pass filter Lf3 including third input resistor R3 and third capacitor C3; and third discharge circuit Dh3 including third discharge switch Qd3 and third discharge resistor Rd3 which are connected in series to each other. Cell V4 and voltage measurement line L4 connected to the positive electrode of cell V4 via input resistor R4 constitute a fourth channel. The fourth channel further includes: fourth low-pass filter Lf4 including fourth input resistor R4 and fourth capacitor C4; and fourth discharge circuit Dh4 including fourth discharge switch Qd4 and fourth discharge resistor Rd4 which are connected in series to each other.

Cells V1 to V4 are connected in series to one another between ground line L0 and voltage measurement line L4 having the highest voltage to constitute battery assembly 2. The negative electrode of cell V1 is connected to ground line L0, and the positive electrode of cell V4 is connected to voltage measurement line L4. The negative electrodes and the positive electrodes of cells V1 to V4 which are connected in series to one another have potentials in the circuits of FIGS. 2 and 4. Cell V1 having the lowest potential among cells V1 to V4 is the lowest cell. Cell V2 has a potential higher than cell V1, and thus cell V2 is immediately upper than cell V1, and cell V1 is immediately lower than cell V2. Similarly, cell V3 has a potential higher than cell V2, and thus cell V3 is immediately upper than cell V2, and cell V2 is immediately lower than cell V3. Cell V4 has a potential higher than cell V3, and thus cell V4 is immediately upper than cell V3, and cell V3 is immediately lower than cell V4. Cell V4 having the highest potential among cells V1 to V4 is the uppermost cell. Based on the above, the channel including cell V1 and voltage measurement line L1 is the lowest channel. The second channel including cell V2 and voltage measurement line L2 is immediately upper than the first channel including cell V1 and voltage measurement line L1, and the first channel is immediately lower than the second channel. The third channel including cell V3 and voltage measurement line L3 is immediately upper than the second channel, and the second channel is immediately lower than the third channel. The fourth channel including cell V4 and voltage measurement line L4 is immediately upper than the third channel, and the third channel is immediately lower than the fourth channel. The fourth channel is the uppermost channel.

Double protection IC 30 is connected to each of first to fourth branch voltage measurement lines L1a to L4a and branch ground line L0a which are branched from respective nodes on first to fourth voltage measurement lines L1 to L4 and ground line L0 closer to battery assembly 2 than the low-pass filters. First to fourth branch input resistors R1a to R4a are connected to first to fourth branch voltage measurement lines L1a to L4a, respectively. First to fourth branch input capacitors C1a to C4a are connected between two adjacent branch voltage measurement lines and between first branch voltage measurement line L1a and branch ground line L0a, respectively. First to fourth branch input resistors R1a to R4a and first to fourth branch input capacitor C1a to C4a constitute low-pass filters, respectively, to suppress aliasing.

In double protection IC 30, first to fourth detection resistors R31 to R34 which have high resistances are connected between two adjacent branch voltage measurement lines and between first branch voltage measurement line L1a and branch ground line L0a, respectively. Double protection IC 30 outputs an alarm signal when one of the voltages across first to fourth detection resistors R31 to R34 exceeds a threshold voltage for an overcharge determination. Accordingly, double protection IC 30 detects overcharges of first to fourth cells V1 to V4 by monitoring a voltage between two adjacent voltage measurement lines and a voltage between first voltage measurement line L1 and ground line L0.

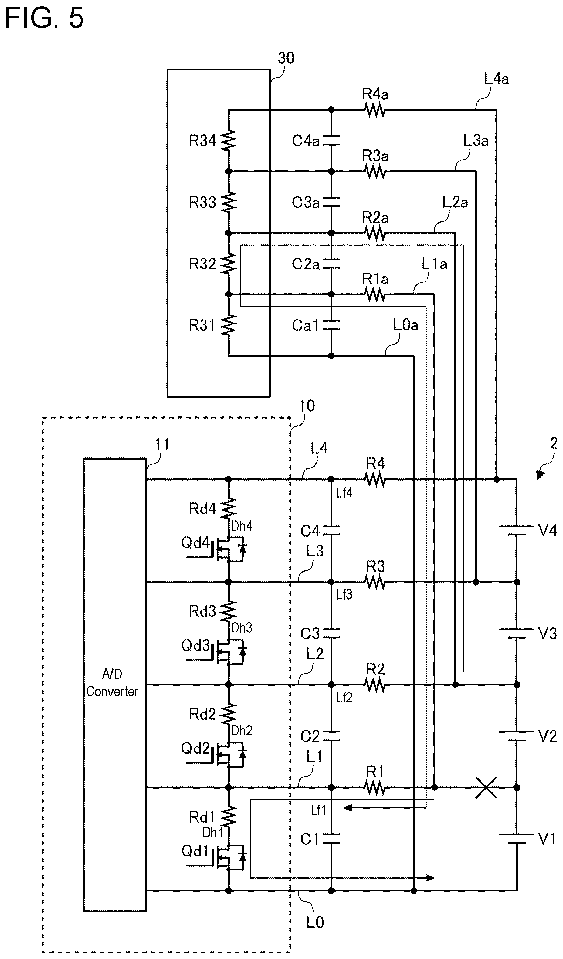

FIG. 5 is a diagram showing a method of detecting a disconnection of a voltage measurement line of the circuit configuration shown in FIG. 4. In the example shown in FIG. 5, first voltage measurement line L1 is disconnected. When the disconnection of first voltage measurement line L1 is diagnosed, charge and discharge controller 22 turns on first discharge switch Qd1 of the first channel connected to first cell V1. Accordingly, the voltage of the first channel input to A/D converter 11 becomes a divided voltage of first input resistor R1 and first discharge resistor Rd1, thus significantly decreasing.

Charge and discharge controller 22 turns on first discharge switch Qd1 and turns off first discharge switch Qd1 after a predetermined time. Since an on-time of turning on discharge switch Qd1 is a time for discharging electric charges of first input capacitor C1 and may be a short time (for example, about 1 msec), the influence on capacitance balance between cells V1 to V4 can be ignored.

After first discharge switch Qd1 is turned off, in a normal state where first voltage measurement line L1 is not disconnected, first input capacitor C1 is charged up via first input resistor R1, and the voltage of the first channel is quickly recovered. On the other hand, in an abnormal state where first voltage measurement line L1 is disconnected, first input capacitor C1 is charged up via double protection IC 30, so that the voltage of the first channel may be slowly recovered.

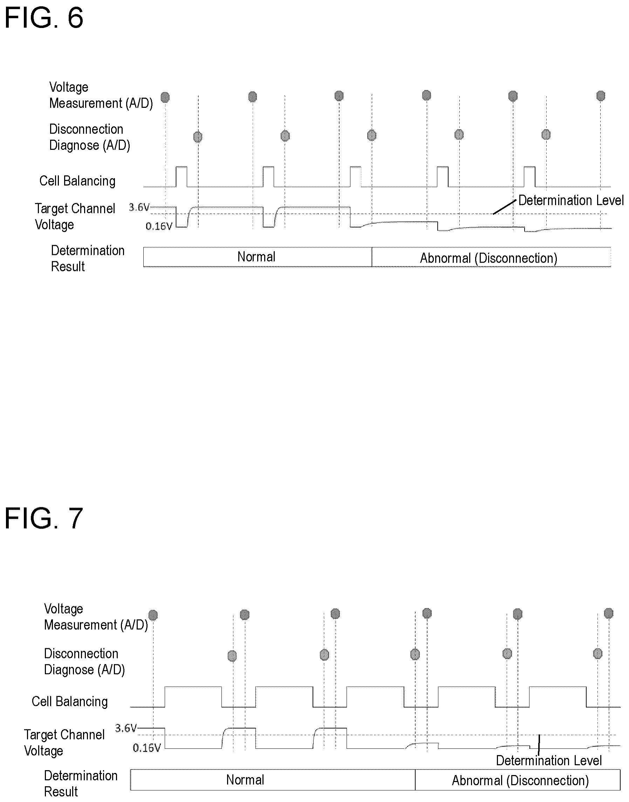

FIG. 6 is a schematic timing chart showing Specific Example 1 of the disconnection detection method in the normal state. Charge and discharge controller 22 performs the disconnection diagnosis of first voltage measurement line L1 at a timing after a predetermined period of time elapses from the turn-off of first discharge switch Qd1. The voltage of the first channel exceeds a first determination level (first threshold voltage) in the normal state, and falls below the first determination level in the abnormal state. When the voltage of the first channel does not recover to the determination level within the predetermined period of time from the turn-off of first discharge switch Qd1, charge and discharge controller 22 determines that an abnormality such as disconnection has occurred in first voltage measurement line L1. Even when first voltage measurement line L1 is not physically disconnected, if first voltage measurement line L1 is unable to be energized, it is determined to be abnormal.

For example, in the case that first input resistor R1 is 220 Ω and first discharge resistor Rd1 is 10 Ω, the voltage of the first channel recovers to about 78% in the normal state and recovers only to about 9.2% in the abnormal state at a timing of 1 msec after first discharge switch Qd1 is turned off. For example, when the first determination level for determining an abnormality is set to a value (for example, 2.2 V) less than 60% of a voltage measurement value (for example, 3.8 V) before first discharge switch Qd1 is turned on, the abnormality determination may be performed at a timing of at least 1 msec after first discharge switch Qd1 is turned off.

In a simulation by the present inventors, a voltage of a target channel exceeds the first determination level in about 0.55 msec when there is no disconnection, but does not exceed the first determination level even when about 8 msec elapses when there is a disconnection, and it is confirmed that the abnormality determination can be performed in 1 msec.

Similarly to the first channel, the disconnection diagnosis is performed for the second and subsequent channels. That is, charge and discharge controller 22 periodically and sequentially sets on periods for first to fourth discharge switches Qd1 to Qd4, and performs the disconnection diagnosis based on a change of the voltage of the target channel after a discharge switch of the target channel is turned off.

FIG. 7 is a schematic timing chart showing Specific Example 1 of the disconnection detection method in a cell balancing state. In the cell balancing state, first to fourth discharge switches Qd1 to Qd4 are basically controlled to be turned on. In the cell balancing state, charge and discharge controller 22 sets a periodic off-period for first to fourth discharge switches Qd1 to Qd4. The off-period is set to the predetermined period of time (1 msec) + α, that is, a time slightly longer than the predetermined period of time.

Charge and discharge controller 22 periodically and sequentially sets off-periods for first to fourth discharge switches Qd1 to Qd4. First, charge and discharge controller 22 performs the disconnection diagnosis for first voltage measurement line L1 at a timing after the predetermined period of time elapses from the turning off of first discharge switch Qd1. After the disconnection diagnosis, charge and discharge controller 22 measures the voltage of the first channel before turning on first discharge switch Qd1. Similarly to the first channel, the disconnection diagnosis and the voltage measurement are performed for the second and subsequent channels.

Accordingly, during cell balancing, charge and discharge controller 22 periodically sets an off-period for the discharge switch of each channel, and diagnoses whether an abnormality occurs in the voltage measurement line of the channel. Charge and discharge controller 22 measures the voltage of the channel during the off-period. Accordingly, the disconnection diagnosis for each channel may be performed even during the cell balancing. At this moment, a period in which the balance adjustment circuit stops and the discharge of the cell stops occurs, but since the stop period is a short time (for example, about 1 msec), the influence on the delay of the cell balancing is minimized.

In battery assembly 2 having a small capacity, it is necessary to consider the influence of fluctuation of the cell voltage due to a discharge current for the cell balancing, but the voltage of each of cells V1 to V4 may be measured at a timing when the discharge current does not flow by using the stop period of the balance adjustment circuit at the time of disconnection diagnosis. Accordingly, the voltage of each of cells V1 to V4 may be measured accurately even during the cell balancing.

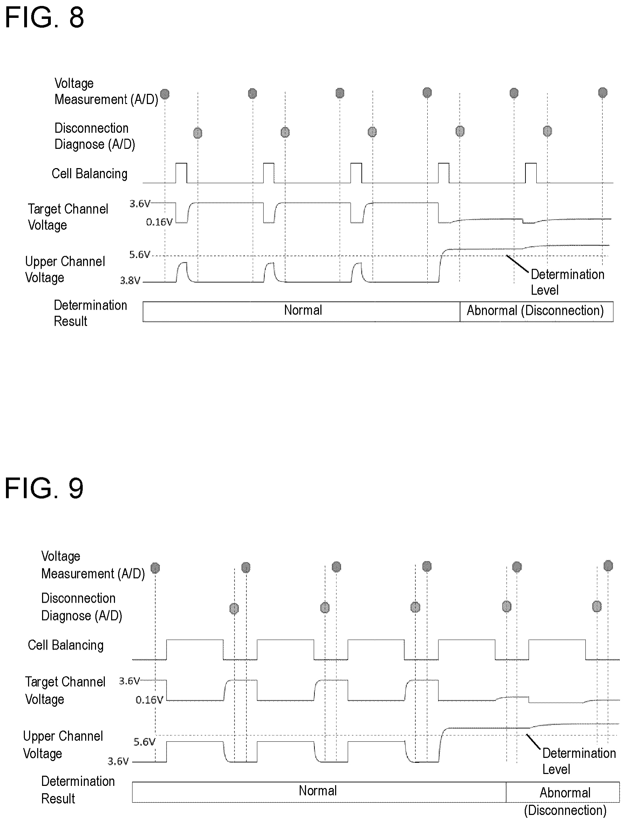

FIG. 8 is a schematic timing chart showing Specific Example 2 of the disconnection detection method in the normal state. As described above, when first discharge switch Qd1 is turned on, the voltage of the first channel (voltage measurement line L1) input to A/D converter 11 becomes the divided voltage of first input resistor R1 and first discharge resistor Rd1, thus significantly decreasing. Accordingly, the voltage of the second channel (second voltage measurement line L2) adjacent to the first channel on an upper-potential side, that is, immediately upper than the first channel significantly increases.

When first discharge switch Qd1 is turned off in the normal state where first voltage measurement line L1 is not disconnected, first input capacitor C1 is charged up via first input resistor R1, and the voltage of the first channel is quickly recovered to the voltage of first cell V1. Accordingly, the voltage of the second channel drops quickly to the voltage of second cell V2.

On the other hand, in an abnormal state where first voltage measurement line L1 is disconnected, first input capacitor C1 is charged up via double protection IC 30, so that the voltage of the first channel may be slowly recovered. Accordingly, the voltage of the second channel remains high.

Charge and discharge controller 22 performs the disconnection diagnosis for first voltage measurement line L1 at a timing after a predetermined period of time elapses from the turning off of first discharge switch Qd1. The voltage of the second channel falls below a second determination level (second threshold voltage) in the normal state, and exceeds the second determination level in the abnormal state. When the voltage of the second channel exceeds the second determination level after the predetermined period of time elapses from the turning off of first discharge switch Qd1, charge and discharge controller 22 determines that an abnormality such as disconnection occurs in first voltage measurement line L1.

For example, in the case that first input resistor R1 is 220 Ω and first discharge resistor Rd1 is 10 Ω, the voltage of the second channel recovers to the voltage of second cell V2 in the normal state and rises to about 190% of the voltage of second cell V2 in the abnormal state at a timing of 3 msec after first discharge switch Qd1 is turned off. For example, when the determination level for determining an abnormality is set to a value (for example, 5.6 V) larger than 160% of the voltage measurement value (for example, 3.8 V) before first discharge switch Qd1 is turned on, the abnormality determination may be performed at a timing of at least 1 msec after first discharge switch Qd1 is turned off.

In a simulation by the present inventors, the voltage of the upper adjacent channel of the target channel is lower than the second determination level when there is no disconnection, but when there is a disconnection in the voltage measurement line of the target channel, the voltage of the upper adjacent channel is higher than the second determination level when about 0.45 msec elapses from the turning off of first discharge switch Qd1, and it is confirmed that the abnormality determination can be performed in 1 msec.

Similarly to the first channel, the disconnection diagnosis is performed for the second and subsequent channels. That is, charge and discharge controller 22 periodically and sequentially sets on periods for first to fourth discharge switches Qd1 to Qd4, and performs the disconnection diagnosis based on a change of a voltage of an upper adjacent channel after the discharge switch of the target channel is turned off.

FIG. 9 is a schematic timing chart showing Specific Example 2 of the disconnection detection method in the cell balancing state. Similarly to the timing chart of Specific Example 1 shown in FIG. 7, charge and discharge controller 22 periodically sets an off-period for the discharge switch of each channel during the cell balancing, and diagnoses whether an abnormality occurs in the voltage measurement line of the channel. Charge and discharge controller 22 measures the voltage of the channel during the off-period. At this moment, a period in which the balance adjustment circuit stops and the discharge of the cell stops occurs, but since the stop period is a short time (for example, about 1 msec), the influence on the delay of the cell balancing is minimized.

In the circuit configuration shown in FIG. 4, after a discharge switch connected to a lower-potential side of a target voltage measurement line to be diagnosed, that is, a discharge switch of a channel including the target voltage measurement line is turned off, when the voltage measurement line is abnormal, a current for charging up an input capacitor connected to the lower-potential side of the voltage measurement line is designed to decrease to less than 1/10 of that when the voltage measurement line is normal. A resistance value of first to fourth detection resistors R31 to R34 in double protection IC 30 is set to a resistance value ten times or more a resistance value of first to fourth input resistors R1 to R4. For example, when the resistance value of first to fourth input resistors R1 to R4 is 220 Ω, the resistance value of first to fourth detection resistors R31 to R34 may be 1 MΩ or more.

In the circuit configuration shown in FIGS. 1 and 4, double protection IC 30 may be omitted. In this case, when first voltage measurement line L1 is disconnected, if first discharge switch Qd1 is turned off while the electric charge of first input capacitor C1 is discharged, first input capacitor C1 is not charged up via double protection IC 30, but first input capacitor C1 is charged up by a leakage current of second discharge switch Qd2 (MOSFET). Since the leakage current of MOSFET is small, it takes a longer time to complete the charging for first input capacitor C1. Therefore, similarly to the case where double protection IC 30 is provided, the abnormality determination for first voltage measurement line L1 is performed.

As described above, according to the embodiment, by monitoring a voltage behavior of the target channel or the upper adjacent channel after the discharge switch is turned off while the electric charge of the input capacitor is discharged, the abnormality of the voltage measurement line is detected in a short time while reducing the cost. Since an additional circuit is unnecessary, an increase in hardware cost does not occur.

In the circuit configuration according to the comparative example shown in FIG. 2, first to fourth discharge resistors Rd1 to Rd4 are provided outside analog front-end IC 10, whereas in the circuit configuration according to the embodiment shown in FIG. 4, first to fourth discharge resistors Rd1 to Rd4 are provided inside analog front-end IC 10. Therefore, it is not necessary to provide a port for balance adjustment in analog front-end IC 10, the number of ports is reduced to half as compared with the circuit configuration according to the comparative example shown in FIG. 2, and analog front-end IC 10 may have a small size.

Since the disconnection diagnosis is performed in a short time, there is almost no influence of the disconnection diagnosis on the cell voltage, and the diagnosis is performed during charging and discharging of battery assembly 2 or during cell balancing. Charge and discharge controller 22 diagnoses whether an abnormality occurs in the voltage measurement line by periodically setting an on period for the discharge switch regardless of battery assembly 2 is charged or discharged or stopped.

The disclosure has been described above based on the embodiments. The embodiment intended to be illustrative only and it will be understood by those skilled in the art that various modifications to combinations of components and processes are possible and that such modifications are also within the scope of the disclosure.

Although the voltage measurement and the disconnection diagnosis are executed by analog front-end IC 10 in the above embodiment, the voltage measurement and the disconnection diagnosis may be executed by an application specific integrated circuit (ASIC) instead of analog front-end IC 10.

The embodiment may be specified by the following items.

### Item 1

An abnormality detection device (3) including:
a voltage measurement circuit (11) connected to positive electrodes of a plurality of cells (V1-V4) with a plurality of voltage measurement lines (L1-L4), respectively, the voltage measurement circuit (11) being connected to a negative electrode of a lowest cell (V1) among the plurality of cells (V1-V4) with a ground line (L0), the plurality of cells (V1-V4) being connected in series to one another, the voltage measurement circuit (11) being configured to measure voltages of the plurality of cells (V1-V4);
a plurality of input resistors (R1-R4) connected to the plurality of voltage measurement lines (L1-L4), respectively;
a plurality of capacitors (C1-C4) connected between two adjacent voltage measurement lines among the plurality of voltage measurement lines (L1-L4) and between the ground line (L0) and a voltage measurement line (L1) among the plurality of voltage measurement lines (L1-L4) which is connected to the lowest cell (V1), respectively, the plurality of capacitors (C1-C4) constituting low-pass filters with the plurality of input resistors (R1-R4), respectively;
a plurality of discharge circuits connected between the two adjacent voltage measurement lines and between the ground line (L0) and the voltage measurement line (L1) connected to the lowest cell (V1) at respective nodes which are closer to the voltage measurement circuit (11) than the low-pass filters; and
a control circuit (20) configured to execute equalization processing on the plurality of cells (V1-V4) by controlling the plurality of discharge circuits based on the voltages of the plurality of cells (V1-V4) measured by the voltage measurement circuit (11), wherein
each of the plurality of discharge circuits includes a discharge resistor (Rd1-Rd4) and a switch (Qd1-Qd4) connected in series to the discharge resistor (Rd1-Rd4), and
the control circuit (20) is configured to:
   turn on a switch of a certain channel and turn off the switch of the certain channel at a predetermined time after turning on the switch of the certain channel; and
   when a voltage of a channel immediately upper than the certain channel exceeds a threshold voltage when a predetermined period of time elapses from the turning off of the switch, determine that an abnormality occurs in a voltage measurement line among the plurality of voltage measurement lines (L1-L4) between the certain channel and the channel immediately upper than the certain channel.

An abnormality of the voltage measurement line is detected in a short time while reducing cost.

### Item 2

An abnormality detection device (3) according to item 1, wherein, after the switch connected to a lower-potential side of a target voltage measurement line among the plurality of voltage measurement lines (L1-L4) is turned off, a current charging the capacitor connected to the lower-potential side of the target voltage measurement line when the target voltage measurement line is abnormal is less than 1/10 of the current when the target voltage measurement line is normal.

This configuration produces a large difference in a speed at which the capacitor is charged up after the switch is turned off, depending on the presence or absence of an abnormality of the target voltage measurement line.

### Item 3

An abnormality detection device (3) according to item 2, further including
a double protection circuit (30) configured to detect overcharge by monitoring a voltage between the two adjacent voltage measurement lines and a voltage between the voltage measurement line (L1) of the lowest cell (V1) and the ground line (L0) at respective nodes closer to the plurality of cells (V1-V4) than the low-pass filters, wherein
a resistance component of a current path between both ends of each cell passing through the double protection circuit (30) is 10 times or more of a resistance value of each of the input resistors (R1-R4).

This configuration produces a large difference in a voltage behavior measured after the switch is turned off, depending on the presence or absence of an abnormality of the target voltage measurement line.

### Item 4

An abnormality detection device (3) according to item 1, wherein the control circuit (20) is configured to diagnose whether or not an abnormality occurs in a voltage measurement line of a channel corresponding to the switch among the plurality of voltage measurement lines (L1-L4) by periodically providing a turning-off period in which the switch is turned off while executing the equalization processing.

This configuration allows the abnormality diagnosis for the voltage measurement line to be performed even during the execution of the equalization processing.

### Item 5

An abnormality detection device (3) according to item 1, wherein the control circuit (20) is configured to measure a voltage of a channel corresponding to the switch during the turning-off period of the switch.

Even when a capacity of the cell is small, the voltage of the cell is measured accurately during the execution of the equalization processing.

### Item 6

An abnormality detection device (3) according to item 1, wherein the control circuit (20) is configured to diagnose whether or not an abnormality occurs in the voltage measurement line by periodically providing a turning-on period in which the switch is turned on regardless of whether or not the plurality of cells (V1-V4) are charged or discharged or stopped.

This configuration allows the abnormality diagnosis for the voltage measurement line to be performed regardless of a charge or discharge state.

### Item 7

A battery system (1) including:
a battery assembly (2) including a plurality of cells (V1-V4) connected in series to one another; and
the abnormality detection device (3) according to any one of items 1 to 6.

The battery system detects an abnormality of the voltage measurement line in a short time while reducing cost.

### REFERENCE MARKS IN DRAWINGS

1 battery system
2 battery assembly
3 abnormality detection device
4 DC/DC converter
5 upper microcontroller
10 analog front-end IC
11 A/D converter
20 microcontroller
21 first communication unit (C/U)
22 charge and discharge (C/D) controller
23 second communication unit (C/U)
30 double protection IC
V1-V4 cell
L0 ground line
L1-L4 voltage measurement line
R1-R4 input resistor
C1-C4 input capacitor
Rd1-Rd4 discharge resistor
Qd1-Qd4 discharge switch
L0a branch ground line
L1a-L4a branch voltage measurement line
R1a-R4a branch input resistor
C1a-C4a branch input capacitor
R31-R34 detection resistor
D1, D2 diode
Q1, Q2 cut-off switch
T1 thermistor
Rs current detection element

## Claims

1. An abnormality detection device comprising:
a voltage measurement circuit connected to positive electrodes of a plurality of cells with a plurality of voltage measurement lines, respectively, the voltage measurement circuit being connected to a negative electrode of a lowest cell among the plurality of cells with a ground line, the plurality of cells being connected in series to one another, the voltage measurement circuit being configured to measure voltages of the plurality of cells;
a plurality of input resistors connected to the plurality of voltage measurement lines, respectively;
a plurality of capacitors connected between two adjacent voltage measurement lines among the plurality of voltage measurement lines and between the ground line and a voltage measurement line among the plurality of voltage measurement lines which is connected to the lowest cell, respectively, the plurality of capacitors constituting low-pass filters with the plurality of input resistors, respectively;
a plurality of discharge circuits connected between the two adjacent voltage measurement lines and between the ground line and the voltage measurement line connected to the lowest cell at respective nodes which are closer to the voltage measurement circuit than the low-pass filters; and
a control circuit configured to execute equalization processing on the plurality of cells by controlling the plurality of discharge circuits based on the voltages of the plurality of cells measured by the voltage measurement circuit, wherein
each of the plurality of discharge circuits includes a discharge resistor and a switch connected in series to the discharge resistor, and
the control circuit is configured to:
turn on a switch of a certain channel and turn off the switch of the certain channel at a predetermined time after turning on the switch of the certain channel; and
when a voltage of a channel immediately upper than the certain channel exceeds a threshold voltage when a predetermined period of time elapses from the turning off of the switch, determine that an abnormality occurs in a voltage measurement line among the plurality of voltage measurement lines between the certain channel and the channel immediately upper than the certain channel.

2. The abnormality detection device according to claim 1, wherein, after the switch connected to a lower-potential side of a target voltage measurement line among the plurality of voltage measurement lines is turned off, a current charging a capacitor connected to the lower-potential side of the target voltage measurement line when the target voltage measurement line is abnormal is less than 1/10 of the current when the target voltage measurement line is normal.

3. The abnormality detection device according to claim 2, further comprising
a double protection circuit configured to detect overcharge by monitoring a voltage between the two adjacent voltage measurement lines and a voltage between the voltage measurement line of the lowest cell and the ground line at respective nodes closer to the plurality of cells than the low-pass filters, wherein
a resistance component of a current path between both ends of each cell passing through the double protection circuit is 10 times or more of a resistance value of each of the input resistors.

4. The abnormality detection device according to claim 1, wherein the control circuit is configured to diagnose whether or not an abnormality occurs in a voltage measurement line of a channel corresponding to the switch among the plurality of voltage measurement lines by periodically providing a turning-off period in which the switch is turned off while executing the equalization processing.

5. The abnormality detection device according to claim 1, wherein the control circuit is configured to measure a voltage of a channel corresponding to the switch during the turning-off period of the switch.

6. The abnormality detection device according to claim 1, wherein the control circuit is configured to diagnose whether or not an abnormality occurs in the voltage measurement line by periodically providing a turning-on period in which the switch is turned on regardless of whether or not the plurality of cells are charged or discharged or stopped.

7. A battery system comprising:
a battery assembly including a plurality of cells connected in series to one another; and
the abnormality detection device according to any one of claims 1 to 6.
